(19) Europäisches Patentamt
European Patent Office
Office européen des brevets

(11) Veröffentlichungsnummer: **0 302 206 B1**

(12) **EUROPÄISCHE PATENTSCHRIFT**

(45) Veröffentlichungstag der Patentschrift: **01.04.92**

(51) Int. Cl.[5]: **H01M 4/62**, H01M 6/04

(21) Anmeldenummer: **88109734.9**

(22) Anmeldetag: **18.06.88**

(54) **Galvanisches Element.**

(30) Priorität: **03.08.87 DE 3725629**

(43) Veröffentlichungstag der Anmeldung:
**08.02.89 Patentblatt 89/06**

(45) Bekanntmachung des Hinweises auf die Patenterteilung:
**01.04.92 Patentblatt 92/14**

(84) Benannte Vertragsstaaten:
**AT BE CH DE ES FR GB IT LI**

(56) Entgegenhaltungen:
**DE-A- 1 421 582**

**CHEMICAL ABSTRACTS, Band 88, Nr. 52, 1978, Seite 149, Zusammenfassung Nr. 107896r, Columbus, Ohio, US; & JP-A-77 125 722 (HITACHI MAXELL, LTD) 21-10-1977**

(73) Patentinhaber: **VARTA Batterie Aktiengesellschaft
Am Leineufer 51
W-3000 Hannover 21(DE)**

(72) Erfinder: **Laig-Hörstebrock, Helmut, Dr. Dipl.-Phys.
Prieststrasse 13
W-6000 Frankturt 1(DE)**
Erfinder: **Krey, Winfried Dr. Dipl.-Chem.
Wiesenweg 5
W-7090 Ellwangen(DE)**

(74) Vertreter: **Kaiser, Dieter Ralf, Dipl.-Ing.
Gundelhardtstrasse 72
W-6233 Kelkheim/Ts.(DE)**

EP 0 302 206 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein galvanisches Element mit einem als Stromableiter dienenden vernickelten Stahlbecher, einer in diesen Stahlbecher eingepreßten, im wesentlichen aus Mangandioxid und einem Leitmittel bestehenden Kathode, einer Zinkanode, einem Separator und einem wässrigen alkalischen Elektrolyten.

Es entspricht allgemeiner Erfahrung, daß alkalische Braunstein/Zink-Elemente der vorbeschriebenen Gattung nach Lagerung bei weit über Raumtemperatur hinausgehenden Temperaturen wesentlich schlechtere Entladedaten aufweisen als im frisch hergestellten Zustand. Insbesondere sind Verluste an Kapazität eingetreten.

Als Ursache dieses Phänomens wurde die Ausbildung eines Übergangswiderstandes bzw. Phasengrenzwiderstandes zwischen der ringförmig gepreßten $MnO_2$-Elektrode und der Nickelauflage des Stahlbechers festgestellt. Wie sich bei entsprechend angelegten Versuchen ergeben hat, können mehrere Einflüsse mit unterschiedlichem Gewicht am Zustandekommen dieser Phasengrenzschicht beteiligt sein. Davon ausgenommen ist offenbar die Wahl der verwendeten Lauge, da sich zwischen Zellen mit reinem KOH-, NaOH- bzw. LiOH-Elektrolyten keine spezifischen Unterschiede in ihrem elektrischen Verhalten zeigen.

Eine ausgesprochen negative Wirkung hinsichtlich des Phasengrenzwiderstandes hat dagegen das Mangan. Dies läßt sich aus der Erhöhung des Widerstandes von Nickelblechen schließen, wenn diese in eine alkalisch eingestellte $MnSO_4$-Lösung getaucht und darin kurze Zeit positiv polarisiert werden. Dabei bilden sich auf der Nickeloberfläche dünne Schichten der vermutlichen Zusammensetzung $Mn(OH)_x$ mit $x>2$. Diese entstehen auch in reinen, durch Hydrolyse schwach sauer reagierenden $MnSO_4$-Lösungen und haben in diesem Fall eine noch weitergehende Steigerung des Widerstandes zur Folge.

Im Hinblick auf die Temperaturlagerfähigkeit des Braunsteins ergab sich, daß eine Polarisation in Laderichtung mit einer ca. 2% der gesamten Braunsteinkapazität betragenden Strommenge den erfahrungsgemäßen Kapazitätsverlust nicht zusätzlich verschlechtert, wohl aber eine entsprechende Polarisation in Entladerichtung (Vorentladung), bei welcher der Phasengrenzwiderstand deutlich erhöht wird.

Als weitere Einflußfaktoren auf den Phasengrenzwiderstand wurden u.a. die Herauslösung metallischer Verunreinigungen aus dem Braunstein mit der Folge eines Widerstandsanstieges oder der Preßdruck bei der Elektrodenherstellung erkannt. Hohe Preßdrucke sind offenbar ungünstig, weil die so erzeugten Elektrodenkörper relativ spröde sind und bei der unvermeidbaren Quellung dann um so schneller mechanisch weich werden.

Eine bekannte Maßnahme, die der Verringerung des Phasengrenzwiderstandes dienen soll, setzt nicht beim Elektrodenmaterial, sondern beim Ableiter an und sieht vor, daß dieser vor allem chemisch inert ist. So wird in der DE-PS 1 421 582 vorgeschlagen, den positiv gepolten Stahlbecher von galvanischen Primärelementen innen mit einer Plattierung zu versehen, die vorzugsweise aus Gold besteht. Nachteile dieser Maßnahme sind der hohe Preis des Goldes sowie die mit seiner galvanischen Aufbringung verbundenen Arbeitsschritte und Kosten.

Der Erfindung liegt die Aufgabe zugrunde, eine Alkali-Manganzelle mit einem Gehäusebecher aus Stahl, welcher konventionell vernickelt ist, anzugeben, die eine gegenüber Erfahrungswerten wesentlich verbesserte Temperaturlagerfähigkeit besitzt.

Die Aufgabe wird erfindungsgemäß mit den im kennzeichnenden Teil des Anspruchs 1 angegebenen Mitteln gelöst.

Danach konnte nicht nur bestätigt werden, daß für Kapazitätsverluste, die sich nach Temperaturlagerung der Zellen besonders störend bemerkbar machen, grundsätzlich ein unerwünschter Übergangswiderstand Kathode/Becher verantwortlich ist, sondern daß dieser Übergangswiderstand insbesondere mit der Bildung einer hochohmigen Nickeloxidschicht auf dem Nickelüberzug des Becher-Ableiters zusammenhängt. Es wurde nämlich gefunden, daß bestimmte Zusätze zur Braunsteinelektrode oder zum Elektrolyten, bei denen es sich um Verbindungen handelt, die in stark alkalischem Milieu mit Nickel starke Komplexsalze bilden, den Aufbau der oxidischen Deckschicht offenbar verhindern, da der Phasengrenzwiderstand in ihrer Gegenwart herabgesetzt wird. Dabei haben sich solche Komplexbildner als besonders wirksam erwiesen, die ausgesucht waren aus der Gruppe der ein- oder mehrkernigen N-Heterocyclen mit entweder einer 1,3-Diazol-Struktur, einer o-Phenanthrolin-Struktur oder einer Struktur mit mindestens einer zu einem N-Atom orthoständigen Carboxylgruppe, oder aus der Gruppe der 1,2-Dioxime, oder aus der Gruppe der o-Dihydroxybenzolsulfonsäuren sowie deren Salzen.

Erfindungsgemäße Zusätze mit Ni-komplexierender Wirkung sind unter den erstgenannten N-heterocyclischen Verbindungen

Imidazol

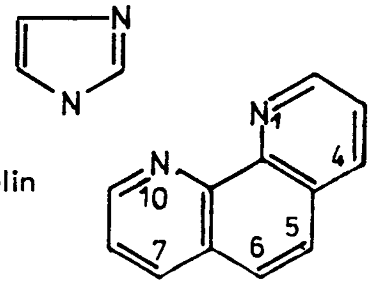

1,10 Phenathrolin

2-Picolinsäure
(Pyridincarbonsäure-(2))

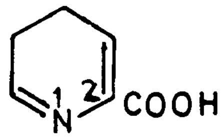

Pyridin-2,6-dicarbonsäure

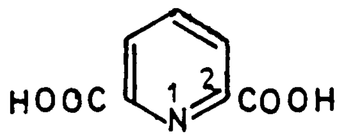

Ein erfindungsgemäßer Zusatz aus der Gruppe der 1,2-Dioxime ist das

Dimethylglyoxim

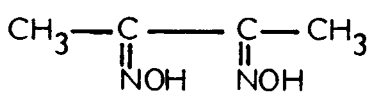

und aus der letztgenannten Gruppe die

o-Dihydroxybenzol-1,3-disulfonsäure
(Tiron)

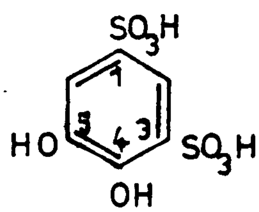

Die überraschende Wirkung der erfindungsgemäßen Zusätze wurden experimentell in einer speziellen Widerstandsmeßapparatur überprüft. Zu diesem Zweck wurden auf Nickelbleche Mangandioxid-Elektrodentabletten mit einem Gehalt von jeweils 0,2Gew.% eines der genannten Komplexbildner unter einem Druck von 75kp/cm$^2$ aufgepreßt, mit 40%iger KOH durchtränkt und bei 90 ° C gelagert. Die Meßapparatur war so gekapselt, daß ein Austrocknen oder ein Umsetzen mit dem $CO_2$ der Luft vermieden wurde. Für die Messung wurde über die Kontaktfläche von der Mangandioxidtablette zum Nickelblech hin ein Strom angelegt und der Spannungsabfall an der Kontaktfläche registiert. Die Abmessungen der Mangandioxidtabletten betrugen 10 mm x 5 mm (Durchmesser x Höhe), und ihre Grundzusammensetzung war 88 Gew. % $MnO_2$, 10 Gew. % Graphit zur Verbesserung der elektrischen Leitfähigkeit, 2 Gew.% Polyäthylen als Bindemittel.

Unter den Bedingungen eines Meßstromes von 500 mA wurden die Testelektroden jeweils in drei verschiedenen Zuständen gemessen:

a) unmittelbar nach Montage der Meßanordnung
b) nach 24 h Lagerzeit bei 90 °
c) nach 96 h Lagerzeit bei 90 ° C

Die relativ kurze Lagerzeit in Kombination mit der relativ hohen Lagertemperatur reicht aus, um die positive Wirkung eines Zusatzes zu erkennen und mit derjenigen eines anderen Zusatzes zu vergleichen. Das Ergebnis einer 90 ° C-Lagerung während eines Monats entspricht etwa dem einer Lagerzeit von 1 bis 1,5 Jahren bei Raumtemperatur.

Die Figur zeigt durch Balkendiagramme, wie sich der Spannungsabfall am Übergang Mangandioxidtablette/Nickelblech als Maß für den Phasengrenzwiderstand Kathode/Becher aufgrund der verschiedenen Zusätze gegenüber einer zusatzfreien Mangandioxidtablette verkleinert. Dabei gelten die Balken eines jeden Tripletts der Reihe nach für die weiter oben definierten Zustände a), b) und c). Die Zusätze zur Tablette sind wie folgt bezeichnet:

1 = Standard(ohne Zusatz)
2 = Imidazol
3 = 2-Picolinsäure
4 = Dimethylglyoxim
5 = 4,5-Dihydroxybenzol-1,3-disulfonsäure
6 = 1,10 Phenanthrolin

Wie man leicht erkennt, läßt sich der Phasengrenzwiderstand mittels 2-Picolinsäure gegenüber der Standardprobe fast um den Faktor 3 reduzieren.

Es wird angenommen, daß die Wirkung der Zusätze darin besteht, daß sie die auf der Oberfläche des Kathodenableiters befindlichen schlechtleitenden Nickeloxide lösen und dadurch einen guten elektronischen Kontakt zur Nickelunterlage ermöglichen.

Bei der Herstellung erfindungsgemäßer galvanischer Elemente fügt sich die Zugabe der Komplexbildner problemlos in den üblichen Fertigungsprozeß ein. Am einfachsten können die wirksamen Substanzen in trockener Form der positiven Elektrodenmasse, die außer dem Aktivbestandteil $MnO_2$ noch ein Leitmittel (Graphit, Ruß) und ein Bindemittel enthält, vor der Verpressung beigemischt werden. Es ist aber auch möglich, die Substanzen, sofern sie nicht selbst flüssig sind, in etwas Elektrolyt zu lösen und in die Elektrode einzutränken.

Die Zusatzmenge sollte erfindungsgemäß zwischen 0,001 und 1 Gew.%, bezogen auf die Kathodenmasse, liegen. Eine Steigerung der Zusatzmenge über 1 Gew.% hinaus fördert die günstige Wirkung der Substanzen nicht.

**Patentansprüche**

**1.** Galvanisches Element mit einem als Stromableiter dienenden vernickelten Stahlbecher, einer in diesen Stahlbecher eingepreßten, im wesentlichen aus Mangandioxid und einem Leitmittel bestehenden Kathode, eine Zinkanode, einem Separator und einem wässrigen alkalischen Elektrolyten, dadurch gekennzeichnet, daß zur Herabsetzung des Übergangswiderstandes zwischen der Kathode und dem Becher, dem Elektrolyten oder der Kathodenmasse ein Komplexbildner zugesetzt ist, der in stark alkalischem Milieu mit Nickeloxid-Deckschichten unter Bildung eines starken Komplexsalzes reagiert.

**2.** Galvanisches Element nach Anspruch 1, dadurch gekennzeichnet, daß der Komplexbildner ausgewählt ist
aus der Gruppe der ein- oder mehrkernigen aromatischen N-Heterocyclen mit entweder einer 1,3-Diazol-Struktur, einer o-Phenanthrolin-Struktur oder einer Struktur mit mindestens einer zu einem N-Atom orthoständigen Carboxylgruppe,
oder aus der Gruppe der 1,2-Dioxime,
oder aus der Gruppe der o-Dihydroxybenzolsulfonsäuren sowie deren Salzen.

**3.** Galvanisches Element nach Anspruch 1, dadurch gekennzeichnet, daß der Komplexbildner eine der N-heterocylischen Verbindungen Imidazol, 1,10 Penanthrolin, 2-Picolinsäure (Pyridincarbonsäure-(2)) und Pyridin-2,6-dicarbonsäure ist.

**4.** Galvanisches Element nach Anspruch 2 dadurch gekennzeichnet, daß der Komplexbildner Dimethylglyoxim ist.

**5.** Galvanisches Element nach Anspruch 2 dadurch gekennzeichnet, daß der Komplexbildner 4,5-Dihydroxybenzol-1,3-disulfonsäure ist.

**6.** Galvanisches Element nach den Ansprüchen 1 bis 5, dadurch gekennzeichnet, daß es den Komplexbildner jeweils in einer Menge von 0,001 bis 1 Gew.%, bezogen auf die Kathodenmasse, enthält.

**7.** Verfahren zur Herstellung eines galvanischen Elements nach einem der Ansprüche 1 bis 6, dadurch gekennzeichnet, daß die Nickel komplexierende Verbindung der Kathodenmasse vor deren Verpressung trocken zugemischt wird.

8. Verfahren zur Herstellung eines galvanischen Elements nach einem der Ansprüche 1 bis 6, dadurch gekennzeichnet, daß die Nickel komplexierende Verbindung in flüssiger oder in im Zellenelektrolyt gelöster Form in die Kathode eingetränkt wird.

## Claims

1. Galvanic cell having: a nickel-plated steel cup serving as a current collector; pressed into this steel cup a cathode substantially comprising manganese dioxide and a conductor means; a zinc anode; a separator; and an aqueous alkaline electrolyte, characterized in that for lowering the transition resistance between the cathode and the cup there is added to the electrolyte or the cathode active mass a complex former which in a strongly alkaline medium reacts with nickel oxide coatings to form a strong complex salt.

2. Galvanic cell according to Claim 1, characterized in that the complex former is selected from the group comprising mono-or multi-nuclear aromatic N-heterocycles having either a 1,3-diazole structure, an o-phenanthroline structure or a structure having at least one carboxyl group in the ortho position with respect to an N-atom, or from the group comprising 1,2-dioximes, or from the group comprising o-dihydroxybenzene-sulphonic acids and the salts thereof.

3. Galvanic cell according to Claim 1, characterized in that the complex former is one of the N-heterocyclic compounds comprising imidazole, 1,10 phenanthroline, 2-picolinic acid (pyridine-carboxylic acid-(2)) and pyridine-2,6-dicarboxylic acid.

4. Galvanic cell according to Claim 2, characterized in that the complex former is dimethyl glyoxime.

5. Galvanic cell according to Claim 2, characterized in that the complex former is 4,5-dihydroxybenzene-1,3-disulphonic acid.

6. Galvanic cell according to Claims 1 to 5, characterized in that it contains the complex former in each case in a quantity of 0.001 to 1% by weight with respect to the cathode active mass.

7. Process for manufacturing a galvanic cell according to one of Claims 1 to 6, characterized in that the nickel-complexing compound of the cathode active mass is admixed in the dry state before it is pressed.

8. Process for manufacturing a galvanic cell according to one of Claims 1 to 6, characterized in that the cathode is impregnated with nickel-complexing compound in liquid form or dissolved in the cell electrolyte.

## Revendications

1. Elément galvanique avec un godet en acier nickelé utilisé comme prise de courant, avec une cathode, constituée essentiellement de bioxyde de manganèse et d'un agent conducteur, pressé dans ce godet en acier, avec une anode de zinc, un séparateur et un électrolyte alcalin aqueux, élément galvanique caractérisé en ce que pour réduire la résistance de passage entre la cathode et le godet, un formateur de complexe est ajouté à l'électrolyte ou bien à la masse de la cathode, formateur de complexe qui réagit dans un milieu fortement alcalin avec les couches de recouvrement en oxyde de nickel en formant un sel fortement complexe.

2. Elément galvanique selon la revendication 1, caractérisé en ce que le formateur de complexe est choisi à partir du groupe des hétérocycles N aromatiques à 1 ou plusieurs noyaux avec, soit une structure 1,3 diazol, une structure o-phénanthroline, ou une structure avec au moins un groupe carboxyle en position ortho par rapport à un atome N, ou bien à partir du groupe des dioximes 1,2, ou bien à partir du groupe des acides o-dihydroxylbenzolsulfoniques ainsi que leurs sels.

3. Elément galvanique selon la revendication 1, caractérisé en ce que le formateur de complexe est un

acide bicarbonique des combinaisons hétérocycliques N, imidazol, 1,10 phénanthroline, 2-acide picolinique (acide carbonique pyridinique-(2)) et de l'acide dicarbonique pyridine-2,6.

**4.** Elément galvanique selon la revendication 2, caractérisé en ce que le fondateur de complexe est de la diméthylglyoxime.

**5.** Elément galvanique selon la revendication 2, caractérisé en ce que le fondateur de complexe est de l'acide 4,5-dihydroxybenzol-1,3-disulfonique.

**6.** Elément galvanique selon les revendications 1 à 5, caractérisé en ce qu'il contient le formateur de complexe respectivement en une quantité de 0,001 à 1 % en poids, rapportée à la masse de la cathode.

**7.** Procédé pour la fabrication de l'élément galvanique selon une des revendications 1 à 6, caractérisé en ce que la combinaison complexant le nickel est mélangée à la masse de la cathode à sec avant la compression de celle-ci.

**8.** Procédé pour fabriquer un élément galvanique selon une des revendications 1 à 6, caractérisé en ce que la combinaison complexant le nickel est imprégnée dans la cathode sous forme liquide ou bien sous forme dissoute dans l'électrolyte de l'élément.

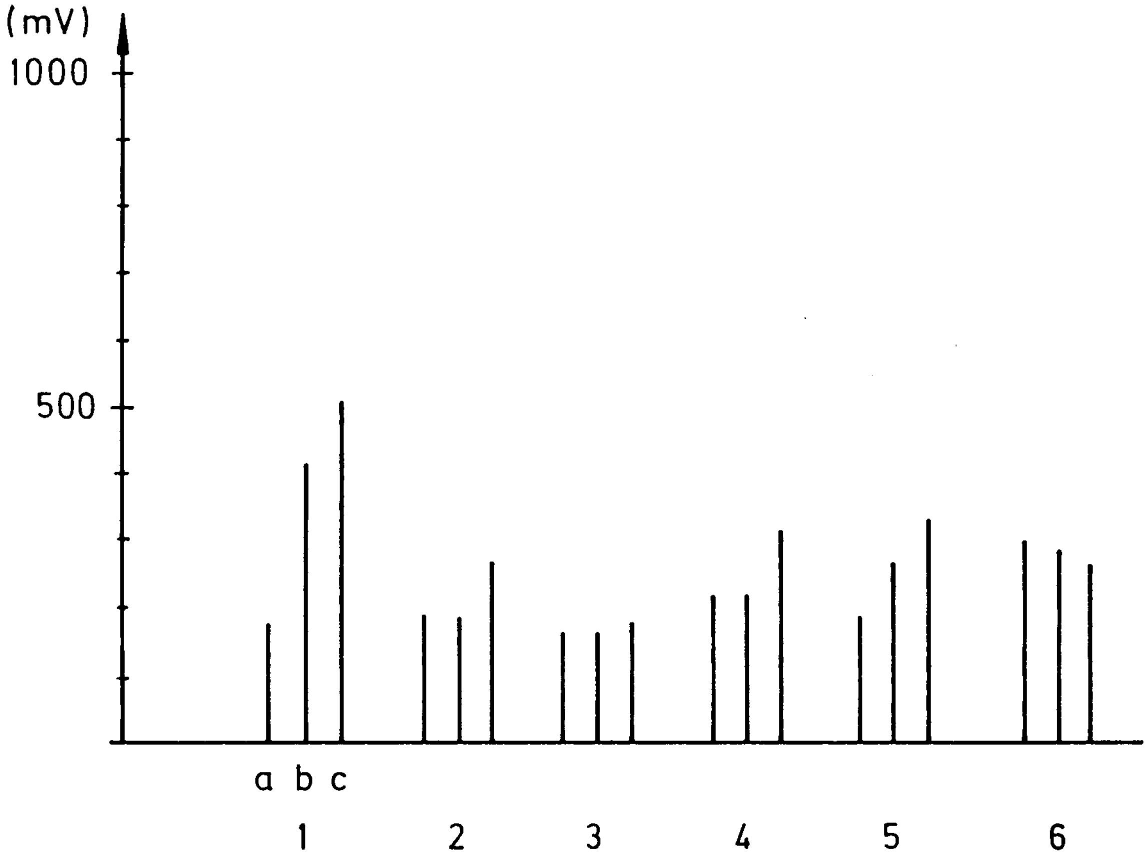
(mV)
1000
500
a b c
1
2
3
4
5
6